# EUROPEAN PATENT APPLICATION

(11) **EP 4 692 473 A1**
(43) Date of publication of application: **11.02.2026**
(21) Application number: 24778838.3
(22) Date of filing: 19.02.2024
(51) Int. Cl.: E02F 9/24, E02F 9/26, H04N 7/18

(54) **OPERATION HISTORY MANAGEMENT SYSTEM**

(30) Priority: 27.03.2023 JP 2023049729
(71) Applicant: Hitachi Construction Machinery Co., Ltd., Tokyo 110-0015 (JP)
(72) Inventor: TAGO Hisashi, Tsuchiura-shi, Ibaraki 300-0013 (JP); TANAKA Masamichi, Tsuchiura-shi, Ibaraki 300-0013 (JP); HIGURASHI Masaki, Tsuchiura-shi, Ibaraki 300-0013 (JP); SATO Kiichi, Tsuchiura-shi, Ibaraki 300-0013 (JP); SAKAI Daito, Tsuchiura-shi, Ibaraki 300-0013 (JP); MITSUHASHI Genki, Tsuchiura-shi, Ibaraki 300-0013 (JP)
(74) Representative: MERH-IP Matias Erny Reichl Hoffmann Patentanwälte PartG mbB
(86) International application number: PCT/JP2024/005743
(87) International publication number: WO 2024/202693

(57) **Abstract**

To allow a user to accurately grasp an accident occurrence risk including a contact risk in a worksite where a plurality of work machines operate and to encourage implementation of safety measures. An operation history management system 100 includes a server 31 that manages operation history of a work machine 33 and a terminal device 34. The server 31 includes an information storage device 312 that stores operating information of the work machine 33 in association with a time of acquisition of the operating information and position information of the work machine 33 at the time, and stores a map 60 including information of a terrain 61 and an object 62 in a worksite 32, and an information processing device 311 that draws a movement trajectory of the work machine 33 operating in the worksite 32 and another work machine 33 operating in the worksite 32 on the map 60 having drawn thereon the terrain 61 and the object 62 in the worksite 32, and causes the terminal device 34 to display.

## Description

### Technical Field

The present invention relates to an operation history management system for managing operation history of work machines.

### Background Art

In a worksite where a plurality of work machines operate, accident occurrence risks may be present such as a contact risk between adjacent work machines, or a contact risk between the work machine and a terrain or an object in the worksite. In the worksite, strict safety management is performed by deploying a traffic controller, limiting an operation area, and the like. Even if there is no actual contact, any movement trajectory of a work machine intersecting another work machine or the like at a certain point may potentially have a contact risk. However, it is not easy to grasp the above-described accident occurrence risks by the viewpoint of an operator of the work machine or through visual monitoring by a traffic controller.

Patent Literature 1 discloses a technique for uploading information about the operating location and operation content of the work machine to a server such that detailed operating information can be confirmed remotely.

### Citation List

### Patent Literature

Patent Literature 1: JP 5744708 B

### Summary of Invention

### Technical Problem

However, the technique disclosed in Patent Literature 1 collects the operating information of a single work machine, and thus cannot accurately reproduce the situation of the worksite where a plurality of work machines operate. Thus, the technique disclosed in Patent Literature 1 cannot allow a user to accurately grasp an accident occurrence risk including a contact risk in the worksite where the plurality of work machines operate.

In view of the above circumstances, it is an object of the present invention to allow a user to accurately grasp an accident occurrence risk including a contact risk in the worksite where the plurality of work machines operate and to encourage implementation of safety measures.

### Solution to Problem

To solve the above-described issues, the operation history management system of the present invention is an operation history management system including: a server configured to manage operation history of a work machine operating in a worksite; and a terminal device communicatively connected to the server. The server includes an information storage device configured to store operating information of the work machine in association with a time of acquisition of the operating information and position information of the work machine at the time, and store a map including information of a terrain and an object in the worksite, and an information processing device configured to draw a movement trajectory of the work machine operating in the worksite and another work machine operating in the worksite, on the map having drawn thereon the terrain and the object, on the basis of the operating information and the position information stored in the information storage device, and cause the terminal device to display.

### Advantageous Effects of Invention

According to the present invention, it is possible to allow a user to accurately grasp an accident occurrence risk including a contact risk in the worksite where the plurality of work machines operate and to encourage implementation of safety measures.

### Brief Description of Drawings

Fig. 1 is a view illustrating an exterior configuration of a work machine.
Fig. 2 is a diagram illustrating a configuration associated with recording of operating information of the work machine illustrated in Fig. 1.
Fig. 3 is a diagram illustrating a configuration of an operation history management system.
Fig. 4 is a diagram illustrating a functional configuration of an information processing device illustrated in Fig. 3.
Fig. 5 is a diagram illustrating an operation history management screen displayed on a terminal device illustrated in Fig. 3.
Fig. 6 is a diagram illustrating an operating information window displayed on the management screen illustrated in Fig. 5.

### Description of Embodiments

Hereinafter, an embodiment of the present invention will be described with reference to the drawings. Parts denoted by identical reference signs in the embodiment have similar functions in each embodiment unless particularly specified otherwise, and description thereof will be omitted.

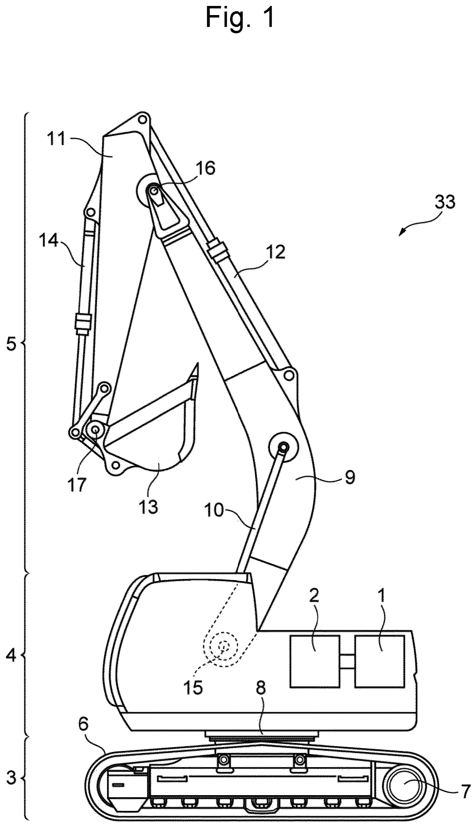

Fig. 1 is a view illustrating an exterior configuration of a work machine 33.

The work machine 33 whose operation history is managed by an operation history management system 100 may be a construction machine such as a hydraulic excavator, a wheel loader, or a dump truck. Fig. 1 illustrates a hydraulic excavator as an example of the work machine 33, but the work machine 33 is not particularly limited.

The work machine 33 is provided with a prime mover 1 as an engine or an electric motor, and a main pump 2 as a hydraulic pump driven by the prime mover 1. In the work machine 33, a lower traveling body 3, an upper swing body 4, and a front work device 5 independently operate with hydraulic fluid supplied from the main pump 2.

The lower traveling body 3 is made up of a pair of traveling bodies 6 (only one of them is illustrated in Fig. 1), and operates by the rotation of a traveling hydraulic motor 7. The upper swing body 4 is connected to the upper part of the lower traveling body 3 via a swing device 8, and operates by the rotation of a turning hydraulic motor (not illustrated).

The front work device 5 is mounted on the upper swing body 4. The front work device 5 includes a boom 9 rotatably supported by the upper swing body 4, a boom cylinder 10 that drives the boom 9, an arm 11 rotatably supported by the boom 9, an arm cylinder 12 that drives the arm 11, a bucket 13 rotatably supported by the arm 11, and a bucket cylinder 14 that drives the bucket 13. The hydraulic cylinders 10, 12, 14 extend and retract with the hydraulic fluid supplied from the main pump 2 and cause the boom 9, the arm 11, and the bucket 13 to rotate about rotation shafts 15 to 17, respectively. This allows the front work device 5 to perform work such as excavation or leveling.

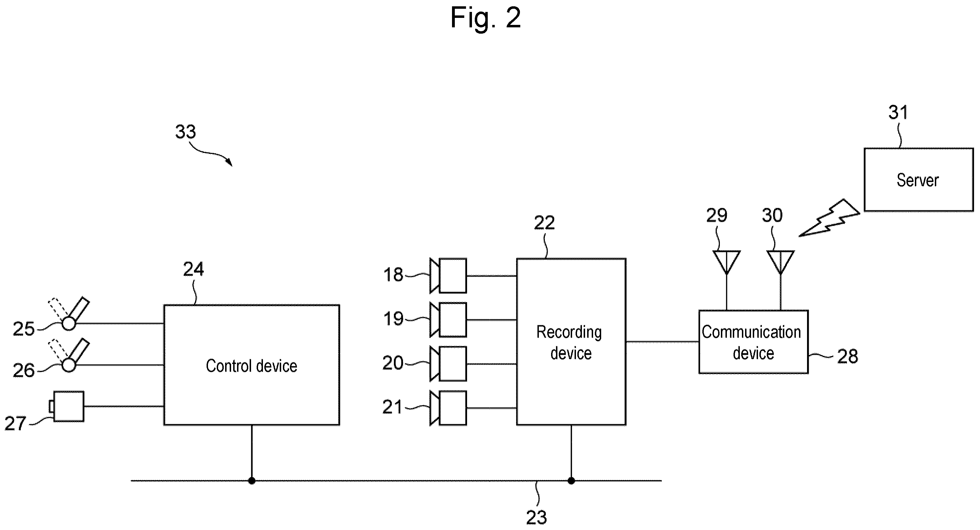

Fig. 2 is a diagram illustrating a configuration associated with recording of operating information of the work machine 33 illustrated in Fig. 1.

Cameras 18 to 21 are attached outside of an operator's cab mounted on the upper swing body 4 of the work machine 33. The cameras 18 to 21 include a rear camera 18, a front camera 19, a right camera 20, and a left camera 21. A video captured by each of the cameras 18 to 21 is input to and recorded in a recording device 22 having an internal memory.

The recording device 22 communicates with a control device 24 that has control over the work machine 33 via an in-vehicle network 23 such as CAN. The recording device 22 receives from the control device 24 and normally records operation information of operating levers such as a gate lock lever 25 or a travel operating lever 26 connected to the control device 24, and an orientation of a machine body (for example, an orientation of the lower traveling body 3) of the work machine 33 detected by an angle sensor 27.

In addition to the video captured by each of the cameras 18 to 21, the operation information of the operating levers, and the orientation of the machine body of the work machine 33, the operating information recorded in the recording device 22 includes the following information. That is, the operating information includes a vehicle speed of the work machine 33, an inclination angle of the machine body (for example, an inclination angle of the lower traveling body 3 with respect to the ground surface), an attitude of the front work device 5 (for example, rotation angles of the boom 9, the arm 11, and the bucket cylinder 14), an attitude of the upper swing body 4 (for example, a swing angle of the upper swing body 4), a rotation speed of the prime mover 1, and hydraulic information of each hydraulic equipment including the main pump 2 and the hydraulic cylinders 10, 12, 14.

The recording device 22 records each type of operating information in association with a time of acquisition of the operating information. For example, the recording device 22 records each type of operating information transmitted from the control device 24 in synchronous with the video captured by each of the cameras 18 to 21. The recording device 22 transmits the recoded operating information to a communication device 28.

The communication device 28 acquires position information of the work machine 33 from a satellite antenna 29. When the operating information is transmitted from the recording device 22, the communication device 28 associates the acquired position information and the time of acquisition of the acquired position information with the operating information transmitted from the recording device 22. The communication device 28 synchronizes with each other the operating information and the position information including the respective times of acquisition and transmits them from a transmission antenna 30 to a server 31. The communication device 28 may regularly transmit the operating information and the position information to the server 31.

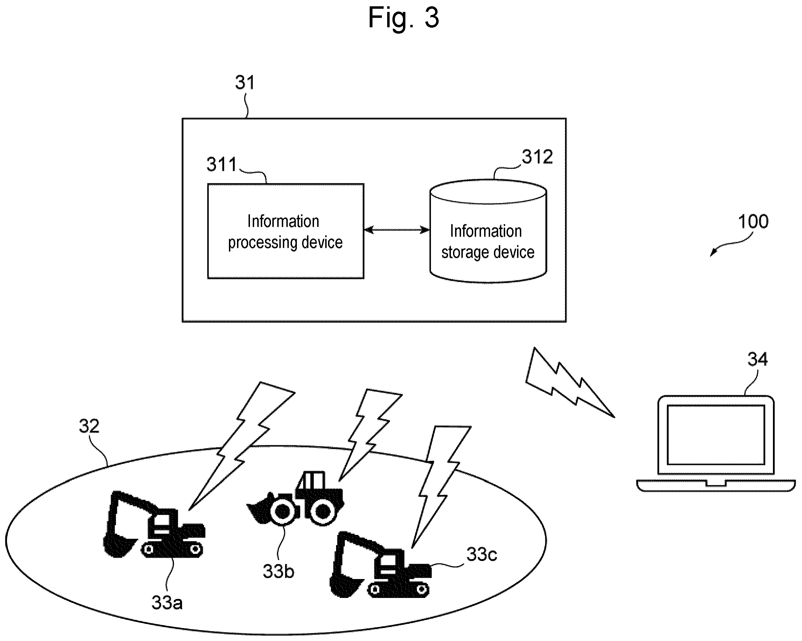

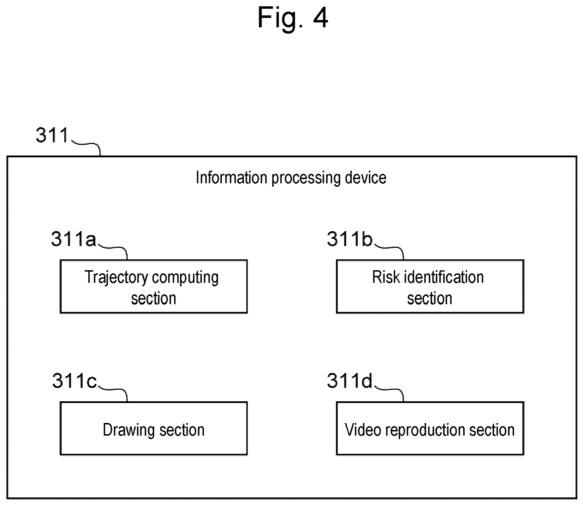

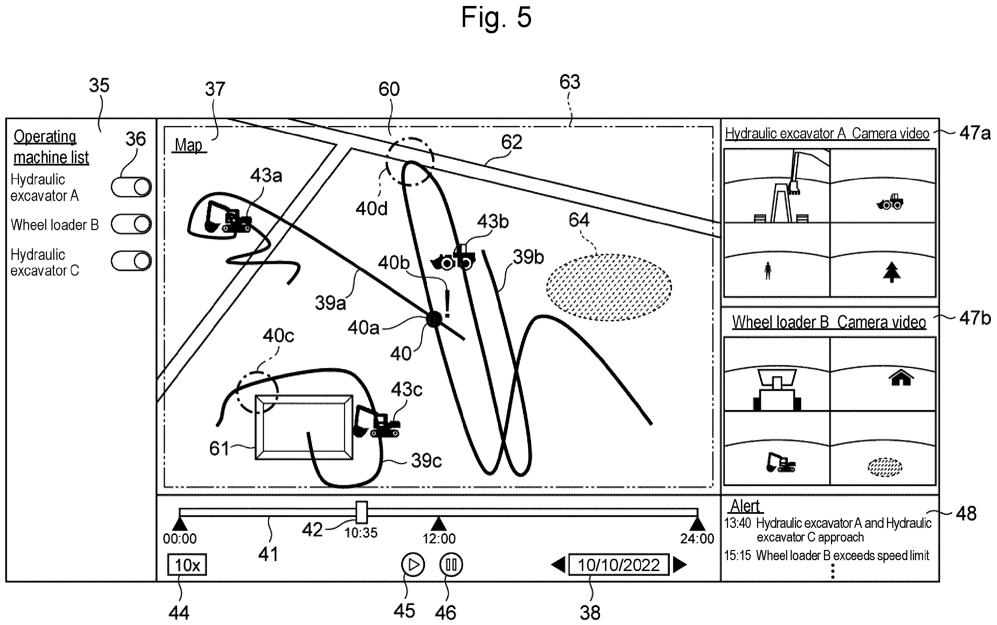

Fig. 3 is a diagram illustrating a configuration of the operation history management system 100. Fig. 4 is a diagram illustrating a functional configuration of an information processing device 311 illustrated in Fig. 3. Fig. 5 is a diagram illustrating an operation history management screen for the work machine 33 displayed on a terminal device 34 illustrated in Fig. 3.

In Fig. 3, work machines 33a to 33c are illustrated as an example of the plurality of work machines 33 operating in a worksite 32. In Fig. 5, a map 60 of the worksite 32 is illustrated, and respective movement trajectories 39a to 39c of the plurality of work machines 33a to 33c are illustrated.

The operation history management system 100 includes the server 31 that manages operation history of the work machine 33 operating in the worksite 32 and the terminal device 34 communicatively connected to the server 31.

The server 31 accumulates for each work machine 33 various types of operating information and position information transmitted from the plurality of work machines 33 operating in the worksite 32. In response to access from the terminal device 34, the server 31 draws each work machine 33 and the operating information thereof and the like on the map 60 of the worksite 32 and transmits the result to the terminal device 34. The terminal device 34 displays the map 60 of the worksite 32 having drawn thereon each work machine 33 and the operating information thereof using, for example, a Web browser or the like. The terminal device 34 receives a user input operation to the map 60 displayed on the terminal device 34 and transmits it to the server 31. The user is a field manager who manages the worksite 32, for example.

The server 31 includes an information storage device 312 that accumulates for each work machine 33 various types of operating information and position information transmitted from the plurality of work machines 33 operating in the worksite 32, and the information processing device 311 that draws each work machine 33 and the like on the map 60 of the worksite 32 and reproduces the situation of the worksite 32.

The information storage device 312 stores each type of operating information of the plurality of work machines 33 in association with a time of acquisition of the operating information and position information of the work machine 33 at the time.

The information storage device 312 stores the map 60 of the worksite 32 and a construction diagram 63 of the worksite 32. The map 60 includes information such as a terrain 61 in the worksite 32 and an object 62 present in the worksite 32. The construction diagram 63 is designed in advance according to a construction plan of the worksite 32 and illustrates a construction position 64 in the worksite 32. The construction diagram 63 may illustrate construction information other than the construction position 64, such as information about the work machine 33 performing construction and construction contents.

As illustrated in Fig. 4, the information processing device 311 includes a trajectory computing section 311a, a risk identification section 311b, a drawing section 311 c, and a video reproduction section 311d.

The trajectory computing section 311a computes a movement trajectory of each work machine 33 operating in the worksite 32 on the basis of various types of operating information and position information stored in the information storage device 312. For example, the trajectory computing section 311a can compute each movement trajectory and an intersection point 40 thereof by tracing the position information of each work machine 33 for each time.

The risk identification section 311b identifies an accident occurrence risk in the worksite 32 where the plurality of work machines 33 operate on the basis of at least the movement trajectories of the work machines 33 computed by the trajectory computing section 311a. The accident occurrence risk includes a contact risk between the work machine 33 and others and a rollover risk of the work machine 33 itself. The contact risk between the work machine 33 and others includes a contact risk between the adjacent work machines 33, a contact risk between the work machine 33 and the terrain 61, and a contact risk between the work machine 33 and the object 62.

For example, the risk identification section 311b can identify an approach location and an approach time between adjacent movement trajectories by computing a distance between the adjacent movement trajectories and searching a location and a time where the computed distance is less than or equal to a threshold. In the same manner, the information processing device 311 can identify an approach location and an approach time between each movement trajectory and the terrain 61 and an approach location and an approach time between each movement trajectory and the object 62. The risk identification section 311b can identify a place where and a timing when the contact risk between the work machine 33 and others was present by identifying these approach locations and approach times.

The drawing section 311c draws the movement trajectory of each work machine 33 computed by the trajectory computing section 311a on the map 60 having drawn thereon the terrain 61 and the object 62 in the worksite 32. The drawing section 311c draws an icon (hereinafter referred to as a "machine body icon") representing each work machine 33 operating in the worksite 32 on the map 60.

The video reproduction section 311d reproduces in the terminal device 34 the video captured by each of the cameras 18 to 21 included in the various types of operating information stored in the information storage device 312.

Using these functions illustrated in Fig. 4, the information processing device 311 draws the movement trajectory of the work machine 33 operating in the worksite 32 and another work machine 33 operating in the worksite 32, on the map 60 having drawn thereon the terrain 61 and the object 62 in the worksite 32, on the basis of the various types of operating information and position information stored in the information storage device 312. In response to access to the server 31 from the terminal device 34, the information processing device 311 transmits the map 60 having drawn thereon the movement trajectory and the like to the terminal device 34. The terminal device 34 displays the map 60 having drawn thereon the movement trajectory and the like using a Web browser or the like.

Accordingly, the operation history management system 100 can visualize the movement of the work machine 33 operating in the worksite 32 with a degree of approach to another work machine 33, the terrain 61 and the object 62 in the worksite 32. Thus, the operation history management system 100 can accurately reproduce in the terminal device 34 the situation of the worksite 32 where the contact risk between the work machines 33, the contact risk between the work machine 33 and the terrain 61, or the contact risk between the work machine 33 and the object 62 was present. Accordingly, the operation history management system 100 can allow the user, such as a field manager viewing the terminal device 34, to accurately grasp the accident occurrence risk including the contact risk in the worksite 32 where the plurality of work machines 33 operate, and can encourage implementation of safety measures.

In particular, as illustrated in Fig. 5, the drawing section 311c of the information processing device 311 simultaneously draws, on the same map 60, movement trajectories of the plurality of work machines 33 operating at the same time in the same worksite 32. The drawing section 311c of the information processing device 311 draws on the map 60 in an emphasized manner at least one of the intersection point 40 of each of the movement trajectories, an approach location between the adjacent movement trajectories, an approach location between each of the movement trajectories and the terrain 61, and an approach location between each of the movement trajectories and the object 62.

In Fig. 5, an example is illustrated in which the intersection point 40 of each movement trajectory is drawn in an emphasized manner, where the drawing section 311c draws an emphasized figure 40a on the intersection point 40 of each movement trajectory. In Fig. 5, an example is illustrated in which the approach location between the adjacent movement trajectories is drawn in an emphasized manner, where the drawing section 311c draws an emphasized figure 40b on the approach location between the adjacent movement trajectories. In Fig. 5, an example is illustrated in which the approach location between each movement trajectory and the terrain 61 is drawn in an emphasized manner, where the drawing section 311c draws an emphasized figure 40c on the approach location between each movement trajectory and the terrain 61. In Fig. 5, an example is illustrated in which the approach location between each movement trajectory and the object 62 is drawn in an emphasized manner, where the drawing section 311c draws an emphasized figure 40d on the approach location between each movement trajectory and the object 62. It is noted that the method of drawing in an emphasized manner these approach locations and intersection point 40 is not limited to the examples illustrated in Fig. 5. For example, the drawing section 311c may draw in an emphasized manner these approach locations and intersection point 40 by partially changing the color or the like of the movement trajectory close to these approach locations and intersection point 40.

Accordingly, the operation history management system 100 can allow the user to grasp a place in the worksite 32 where and a timing when the contact risk between the work machines 33, the contact risk between the work machine 33 and the terrain 61, or the contact risk between the work machine 33 and the object 62 was present. Thus, the operation history management system 100 can allow the user to further accurately grasp the accident occurrence risk including the contact risk in the worksite 32 where the plurality of work machines 33 operate, and can further encourage implementation of safety measures.

Furthermore, the risk identification section 311b of the information processing device 311 can identify a location where an approach frequency between the adjacent movement trajectories is high, a location where an approach frequency between each movement trajectory and the terrain 61 is high, and a location where an approach frequency between each movement trajectory and the object 62 is high, and the drawing section 311c can draw them on the map 60 in an emphasized manner.

Accordingly, the operation history management system 100 can allow the user to further accurately grasp a place in the worksite 32 where and a timing when the contact risk between the work machines 33, the contact risk between the work machine 33 and the terrain 61, or the contact risk between the work machine 33 and the object 62 is high. Thus, the operation history management system 100 can allow the user to further accurately grasp the accident occurrence risk including the contact risk in the worksite 32 where the plurality of work machines 33 operate, and can further encourage implementation of safety measures.

Furthermore, when the work machine 33 is a wheel loader or a dump truck, the risk identification section 311b of the information processing device 311 can identify a location where a rollover risk of the work machine 33 in the movement trajectory is present from the vehicle speed computed from a temporal change in the position information or the vehicle speed included in the operating information, and a radius of curvature of the movement trajectory. When the work machine 33 is a hydraulic excavator, the risk identification section 311b can identify a location where a rollover risk of the work machine 33 in the movement trajectory is present from the inclination angle of the machine body included in the operating information, and the operation information of the travel operating lever or the swing operating lever included in the operating information. In this case, the risk identification section 311b can more accurately identify a location where such a rollover risk is present when taking into account the attitude of the front work device 5 included in the operating information. Then, the drawing section 311c of the information processing device 311 can draw the location where the rollover risk in the movement trajectory is present on the map 60 in an emphasized manner.

Accordingly, the operation history management system 100 can allow the user to accurately grasp not only the contact risk between the work machine 33 and others but also the rollover risk of the work machine 33 itself. Thus, the operation history management system 100 can allow the user to grasp various accident occurrence risks in the worksite 32 where the plurality of work machines 33 operate, and can further encourage implementation of safety measures.

In addition, the drawing section 311c of the information processing device 311 draws the construction diagram 63 representing the construction position 64 of the work machine 33 in the worksite 32 on the map 60 in a superimposed manner.

Accordingly, the operation history management system 100 can allow the user to grasp not only the contact risk between the work machine 33 and others but also an inefficient operation of the work machine 33 with respect to the construction position 64. Thus, the operation history management system 100 can allow the user to grasp not only the accident occurrence risk in the worksite 32 where the plurality of work machines 33 operate but also the risk of reducing productivity. Accordingly, the operation history management system 100 can not only encourage implementation of safety measures but also encourage the operator guidance or improvement of the construction plan.

In addition, the drawing section 311c of the information processing device 311 draws a machine body icon representing the work machine 33 on the position of the work machine 33 on the map 60 at the time specified by the user input operation to the terminal device 34. The drawing section 311c moves the machine body icon along the movement trajectory on the map 60 as time passes.

Accordingly, the operation history management system 100 can visualize the positional relationship between the work machine 33 and others in the worksite 32 and its transition in a manner that the user can easily grasp them, and can allow the user to easily grasp the contact risk between the work machine 33 and others. Thus, the operation history management system 100 can allow the user to accurately and easily grasp the accident occurrence risk including the contact risk in the worksite 32 where the plurality of work machines 33 operate, and can further encourage implementation of safety measures.

In addition, the drawing section 311c of the information processing device 311 reproduces in the terminal device 34 an animation in which the machine body icon is moved along the movement trajectory in response to the reproduction instruction received by the user input operation to the terminal device 34. At this time, on the same screen of the terminal device 34, the video reproduction section 311d of the information processing device 311 simultaneously reproduces, in synchronous with the animation, the video captured by each of the cameras 18 to 21 attached to the work machine 33 represented by the machine body icon.

Accordingly, the operation history management system 100 can further accurately reproduce in the terminal device 34 the situation of the worksite 32 where the contact risk between the work machine 33 and others was present. Thus, the operation history management system 100 can allow the user to further accurately grasp the accident occurrence risk including the contact risk in the worksite 32 where the plurality of work machines 33 operate, and can further encourage implementation of safety measures.

Furthermore, on the same screen of the terminal device 34, the video reproduction section 311d of the information processing device 311 simultaneously reproduces the video captured by each of the cameras 18 to 21 attached to each of the plurality of work machines 33.

Accordingly, the operation history management system 100 can accurately reproduce in the terminal device 34, the surrounding situation or operator's view of each work machine 33 where the contact risk between the adjacent work machines 33 was present. Thus, the operation history management system 100 can allow the user to further accurately grasp the accident occurrence risk including the contact risk in the worksite 32 where the plurality of work machines 33 operate, and can further encourage implementation of safety measures.

The operation history management screen for the work machines 33 displayed on the terminal device 34 includes, as illustrated in Fig. 5, at least an operating machine list window 35 displaying a list of the work machines 33 operating in the worksite 32, a map window 37 displaying the map 60, moving image reproduction windows 47a, 47b displaying a video captured by each of the cameras 18 to 21, and an alert window 48 displaying an alert.

In the operating machine list window 35, names of all of the work machines 33a to 33c operating in the worksite 32 are displayed. To each name of the work machines 33a to 33c in the operating machine list window 35, a switch 36 is assigned. If the user viewing the terminal device 34 enables the switch 36, operation history of the enabled work machines 33a to 33c will be displayed.

In the map window 37, the map 60 of the worksite 32 on a date in a display period field 38 that is arbitrarily specified by the user input operation is displayed, and the movement trajectories 39a to 39c of the work machines 33a to 33c operating on that date are displayed.

In the map window 37, the intersection point 40 between the adjacent movement trajectories 39a to 39c is displayed in an emphasized manner. Furthermore, in the map window 37, an approach location between the adjacent movement trajectories 39a to 39c or a location where an approach frequency between the adjacent movement trajectories 39a to 39c is high, an approach location between the movement trajectories 39a to 39c and the terrain 61 or a location where an approach frequency between the movement trajectories 39a to 39c and the terrain 61 is high, and an approach location between the movement trajectories 39a to 39c and the object 62 or a location where an approach frequency between the movement trajectories 39a to 39c and the object 62 is high are displayed in an emphasized manner with a darker line color or a more conspicuous color. In this way, a location where the contact risk or the rollover risk of the work machine 33 is present, that is, a location where the accident occurrence risk is present, is visually expressed in the map window 37.

In the part below the map window 37, a seek bar 41 with a slider 42 that can change its position by the user input operation is displayed. In the map window 37, machine body icons 43a to 43c are displayed at the positions on the map 60 where the work machine 33 was present at a time corresponding to the position of the slider 42.

When a play button 45 is pressed by the user input operation, the machine body icons 43a to 43c automatically move on the map 60 along the movement trajectories 39a to 39c at a specified playback speed 44. When a stop button 46 is pressed by the user input operation, the machine body icons 43a to 43c stop moving. The machine body icons 43a to 43c can move according to the position of the slider 42 that is arbitrarily changed by the user input operation. Accordingly, in the map window 37, an animation in which the machine body icons 43a to 43c are moved along the movement trajectories 39a to 39c on the map 60 may be displayed.

When any of the machine body icons 43a to 43c is dragged and dropped by the user input operation on the moving image reproduction windows 47a, 47b, a video captured by each of the cameras 18 to 21 of the corresponding work machines 33a to 33c is displayed and played in the moving image reproduction windows 47a, 47b. The video displayed in the moving image reproduction windows 47a, 47b is played in synchronous with the animation in the map window 37 at a time corresponding to the position of the slider 42. The plurality of moving image reproduction windows 47a, 47b is arranged on the same screen. The moving image reproduction windows 47a, 47b can simultaneously reproduce the videos of the plurality of work machines 33a to 33c at the same time. Thus, the situation of the worksite 32 can be more accurately grasped.

In the alert window 48, alerts for near miss events obtained by the position information of the work machines 33a to 33, such as an approach between the work machines 33a to 33c, exceeding the speed limit of the work machines 33a to 33c, or the like, are displayed in chronological order. When the row of each alert is clicked by the user input operation, the position of the slider 42 moves to the time when the alert occurred, and the machine body icons 43a to 43c move according to the position of the slider 42.

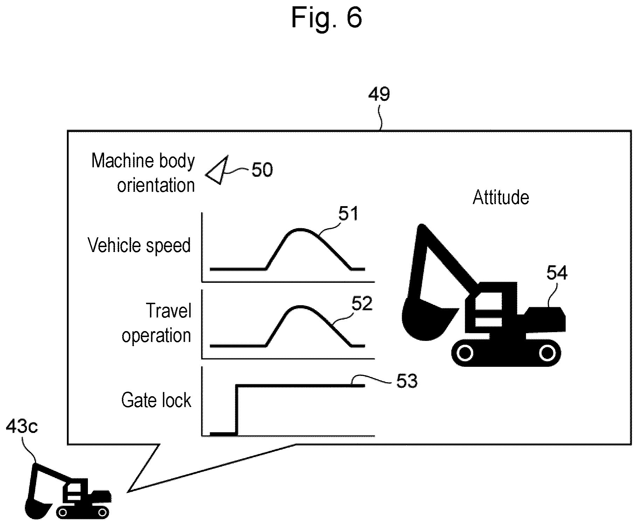

Fig. 6 is a diagram illustrating an operating information window 49 displayed on the management screen illustrated in Fig. 5.

The drawing section 311c of the information processing device 311 can draw at least one type of operating information on the map 60 close to the machine body icon.

For example, on the management screen illustrated in Fig. 5, when the machine body icon 43c on the map window 37 is clicked by the user input operation, the operating information window 49 displaying the operating information of the work machine 33c is shown as a callout near the machine body icon 43c.

The operating information displayed in the operating information window 49 may be, but is not particularly limited to, the operating information acquired by the control device 24. The operating information displayed in the operating information window 49 may be at least one of a vehicle speed of the work machine 33c, an orientation of the machine body of the work machine 33c, an inclination angle of the machine body of the work machine 33c, an attitude of the front work device 5 of the work machine 33c, a rotation speed of the prime mover 1 of the work machine 33c, and operation information of the operating lever of the work machine 33c. The operating information window 49 illustrated in Fig. 6 shows, as an example of the operating information displayed, an icon 50 representing the orientation of the machine body of the work machine 33c, a waveform 51 representing transition of the vehicle speed of the work machine 33c, a waveform 52 representing transition of the operation amount of the travel operating lever 26, a waveform 53 representing transition of the operation of the gate lock lever 25, and an icon 54 representing the attitude of the front work device 5. These icons 50, 54 and waveforms 51 to 53 are drawn by the drawing section 311c.

Even when the operating information window 49 is displayed, the position of the slider 42 can be changed by the user input operation. When the position of the slider 42 is changed while the operating information window 49 is displayed, the operating information window 49 moves following the machine body icon 43c, and also the operating information displayed in the operating information window 49 changes. When the machine body icon 43c is clicked again while the operating information window 49 is displayed, the operating information window 49 is hidden.

With the operating information drawn on the map 60 close to the machine body icon by the information processing device 311, the operation history management system 100 can allow the user to grasp what operation the operator was performing in the worksite 32 where the contact risk between the work machine 33 and others was present. Thus, the operation history management system 100 can allow the user to accurately grasp the cause of the contact risk between the work machine 33 and others. Accordingly, the operation history management system 100 can encourage implementation of safety measures that are more specific and more effective.

Although the embodiment of the present invention has been described in detail above, the present invention is not limited to the aforementioned embodiment, and various changes are possible in so far as they are within the spirit of the present invention in the scope of the claims. In the present invention, it is possible to add, to a configuration of an embodiment, a configuration of another embodiment, to replace a configuration of an embodiment with a configuration of another embodiment, or to delete a part of a configuration of an embodiment.

### Reference Signs List

1 Prime mover
18 to 21 Camera
31 Server
311 Information processing device
311a Trajectory computing section
311b Risk identification section
311c Drawing section
311d Video reproduction section
312 Information storage device
32 Worksite
33, 33a to 33c Work machine
34 Terminal device
39a to 39c Movement trajectory
43a to 43c Machine body icon (icon)
60 Map
61 Terrain
62 Object
63 Construction diagram
64 Construction position
100 Operation history management system

## Claims

1. An operation history management system comprising: a server configured to manage operation history of a work machine operating in a worksite; and a terminal device communicatively connected to the server,
wherein the server includes
an information storage device configured to store operating information of the work machine in association with a time of acquisition of the operating information and position information of the work machine at the time, and store a map including information of a terrain and an object in the worksite, and
an information processing device configured to draw a movement trajectory of the work machine operating in the worksite and another work machine operating in the worksite, on the map having drawn thereon the terrain and the object, on the basis of the operating information and the position information stored in the information storage device, and cause the terminal device to display.

2. The operation history management system according to claim 1, wherein
the information processing device
simultaneously draws, on the same map, movement trajectories of the plurality of work machines operating at a same time in the same worksite, and
draws on the map in an emphasized manner at least one of an intersection point of each of the movement trajectories, an approach location between the adjacent movement trajectories, an approach location between each of the movement trajectories and the terrain, and an approach location between each of the movement trajectories and the object.

3. The operation history management system according to claim 2, wherein
the information storage device further stores a construction diagram representing a construction position of the work machine in the worksite, and
the information processing device draws the construction diagram on the map in a superimposed manner.

4. The operation history management system according to claim 2, wherein
the terminal device receives a user input operation to the map displayed on the terminal device and transmits it to the server, and
the information processing device
draws an icon representing the work machine on a position of the work machine on the map at a time specified by the input operation, and
moves the icon along the movement trajectory on the map as the time passes.

5. The operation history management system according to claim 4, wherein
the operating information includes at least one of a vehicle speed of the work machine, an orientation of a machine body of the work machine, an inclination angle of the machine body, an attitude of a work device of the work machine, a rotation speed of a prime mover of the work machine, and operation information of the work machine, and
the information processing device draws the at least one of the operating information on the map close to the icon.

6. The operation history management system according to claim 4, wherein
the operating information includes a video of a camera attached to the work machine, and
the information processing device simultaneously reproduces the video in synchronous with an animation in which the icon is moved along the movement trajectory, on a same screen of the terminal device.

7. The operation history management system according to claim 6, wherein
the information processing device simultaneously reproduces the video of the camera attached to each of the plurality of work machines on the same screen of the terminal device.
